# EUROPÄISCHE PATENTSCHRIFT

(11) **EP 3 954 881 B1**
(45) Veröffentlichungstag und Bekanntmachung des Hinweises auf die Patenterteilung: **30.08.2023**
(21) Anmeldenummer: 21184935.1
(22) Anmeldetag: 12.07.2021
(51) Int. Cl.: F01N 3/027, F01N 3/20

(54) **ABGASHEIZANORDNUNG**
EXHAUST GAS HEATING ARRANGEMENT
AGENCEMENT DE CHAUFFAGE DE GAZ D'ÉCHAPPEMENT

(30) Priorität: 14.08.2020 DE 102020121414
(43) Veröffentlichungstag der Anmeldung: 16.02.2022
(73) Patentinhaber: Purem GmbH, 66539 Neunkirchen (DE)
(72) Erfinder: Gaiser, Gerd, Reutlingen (DE)
(74) Vertreter: Ruttensperger Lachnit Trossin Gomoll

(56) Entgegenhaltungen:
- EP-A1- 2 826 973
- EP-A1- 3 473 827
- EP-A1- 3 712 397
- DE-A1-102019 101 679
- JP-A- H0 699 079
- JP-A- 2002 235 530
- US-A1- 2018 119 591

## Beschreibung

Die vorliegende Erfindung betrifft eine Abgasheizanordnung für eine Abgasanlage einer Brennkraftmaschine.

Die zunehmend in den Vordergrund tretende Anforderung an einen möglichst geringen Schadstoffausstoß von Brennkraftmaschinen in Fahrzeugen erfordert spezielle Maßnahmen, welche insbesondere in einer Startphase der Brennkraftmaschine den Schadstoffausstoß verringern können. Zu derartigen Maßnahmen zählen insbesondere Maßnahmen, die dazu dienen, in einer Abgasanlage angeordnete Abgasbehandlungseinheiten, wie z. B. Katalysatoren oder Partikelfilter, möglichst schnell auf Betriebstemperatur zu bringen, so dass diese bei einer in der Startphase noch vergleichsweise niedrigen Abgastemperatur bereits zur Durchführung einer katalytischen Reaktion in der Lage sind.

Aus der DE 10 2019 101 679 A1 ist eine Abgasheizeinheit gemäß dem Oberbegriff des Anspruchs 1 bekannt, welche in einem Abgasstrom stromaufwärts einer Abgasbehandlungseinheit angeordnet werden kann. Die Abgasheizeinheit umfasst ein Mantelheizelement mit einem beispielsweise aus Metallmaterial aufgebauten Mantel und einem im Inneren des Mantels in Isoliermaterial eingebettet aufgenommenen Heizleiter. Durch das Anlegen einer elektrischen Spannung an die Anschlussenden des Heizleiters wird dieser erregt und gibt dabei über den Mantel Wärme nach außen ab. An der Außenseite des Mantels ist eine Wärmeübertragungsflächenformation in Form eines den Mantel schraubenartig gewunden umgebenden Wärmeübertragungselements vorgesehen. dieses Wärmeübertragungselement vergrößert die Oberfläche, über welche bei Erregung des Heizleiters Wärme an das eine derartige Abgasheizeinheit umströmende Abgas abgegeben werden kann.

Die JP 2002-245530 A offenbart eine stromaufwärts einer Abgasbehandlungseinheit angeordnete Abgasheizanordnung mit einer Mehrzahl von spiralartig oder ringartig radial gestaffelt angeordneten Abschnitten eines Heizleiters. Die radial gestaffelt angeordneten Abschnitte des Heizleiters können in Richtung einer Längsmittenachse der Abgasheizanordnung bzw. der Abgasbehandlungseinheit zueinander versetzt liegen, so dass ein radial innerer Bereich des Heizleiters bezüglich eines radial äußeren Bereichs des Heizleiters in Richtung der Längsmittenachse versetzt ist und die radial gestaffelt angeordneten Abschnitt des Heizleiters einander in Richtung der Längsmittenachse überlappen.

Die DE 10 2019 107 384 A1 offenbart ein Abgasheizelement, bei welchem zum Vergrößern der zur Wärmeabgabe zur Verfügung stehenden Oberfläche eine Wärmeübertragungsflächenformation mit einem mäanderartig gewundenen Wärmeübertragungselement vorgesehen ist. Das Wärmeübertragungselement weist eine Mehrzahl von aufeinanderfolgend im Wesentlichen parallel zueinander angeordneten und durch jeweilige Krümmungsabschnitte der mäanderartigen Struktur miteinander verbundene Wärmeübertragungselementabschnitte auf, welche von dem Mantelheizelement durchsetzt sind und mit dem Mantel des Mantelheizelements in Wärmeübertragungskontakt stehen. Eine mit einem derartigen Abgasheizelement aufgebaute Heizeinheit kann derart strukturiert sein, dass das Abgasheizelement um eine Längsmittenachse spiralartig gewunden zwischen axial beidseits davon angeordneten Trägerstrukturen gehalten ist, so dass im Wesentlichen über den gesamten Querschnitt eines eine derartige Heizeinheit enthaltenden Abgasführungsgehäuses eine thermische Wechselwirkung des darin strömenden Abgases mit der Heizeinheit erzeugt werden kann.

Es ist die Aufgabe der vorliegenden Erfindung, eine Abgasheizanordnung bereitzustellen, welche bei kompaktem Aufbau eine effiziente Übertragung von Wärme auf diese umströmendes Abgas erreicht.

Erfindungsgemäß wird diese Aufgabe gelöst durch eine Abgasheizanordnung, umfassend eine Heizeinheit mit einem Mantelheizelement mit einem Mantel und wenigstens einem in dem Mantel verlaufenden und von Isoliermaterial umgebenen Heizleiter, wobei die Heizeinheit eine Längsmittenachse spiralartig umgebend gewunden ist, wobei ein radial innerer Windungsendbereich der Heizeinheit bezüglich eines radial äußeren Windungsendbereichs der Heizeinheit in Richtung der Längsmittenachse versetzt ist.

Eine sehr effiziente Übertragung von Wärme auf den Abgasstrom wird dadurch erreicht, dass in wenigstens einem Umfangsbereich wenigstens zwei einander unmittelbar benachbarte Windungsabschnitte der Heizeinheit einander radial überlappen.

Dadurch, dass die Heizeinheit der erfindungsgemäß aufgebauten Abgasheizanordnung spiralartig gewunden nicht im Wesentlichen in einer zur Längsmittenachse orthogonalen Ebene liegend angeordnet, sondern axial ausgedehnt ist, vergrößert sich die Länge des zur Wärmeübertragung zur Verfügung stehenden Mantelheizelements bezogen auf die von dem Abgas durchströmte Querschnittsfläche, was wiederum einen verbesserten Wärmeeintrag in das eine derartige Heizeinheit umströmende Abgas mit sich bringt.

Um die zur Wärmeübertragung zur Verfügung stehende Oberfläche noch weiter vergrößern zu können, wird vorgeschlagen, dass die Heizeinheit eine an dem Mantel getragene Wärmeübertragungsflächenformation umfasst.

Da im Betrieb einer erfindungsgemäßen Abgasheizanordnung Wärme sehr schnell im Bereich der Oberfläche des Mantels bzw. der Wärmeübertragungsflächenformation bereitgestellt wird, auch wenn die Temperatur des die Heizeinheit umströmenden Abgases noch vergleichsweise nieder ist, kann bereits zu einem sehr frühen Zeitpunkt bei Inbetriebnahme einer Brennkraftmaschine bzw. der zugeordneten Abgasanlage eine effiziente Verringerung des im Abgas enthaltenen Schadstoffanteils erreicht werden, wenn die Heizeinheit im Bereich des Mantels oder/und im Bereich der Wärmeübertragungsflächenformation eine mit katalytisch wirksamem Material aufgebaute Außenoberfläche aufweist.

Für eine unter Ausnutzung des zur Verfügung stehenden Volumens größtmögliche Wärmeübertragungsfläche kann beispielsweise dadurch gesorgt werden, dass die Wärmeübertragungsflächenformation wenigstens ein das Mantelheizelement schraubenwindungsartig umgebendes Wärmeübertragungselement umfasst, oder/und dass die Wärmeübertragungsflächenformation eine Mehrzahl von in einer Längsrichtung des Mantelheizelements aufeinanderfolgend angeordneten, scheibenartigen Wärmeübertragungselementen umfasst, oder/und das die Wärmeübertragungsflächenformation wenigstens ein entlang des Mantelheizelements mäanderartig verlaufendes, in jeweiligen Wärmeübertragungselementabschnitten vom Mantelheizelement durchsetztes Wärmeübertragungselement umfasst, oder/und dass die Wärmeübertragungsflächenformation eine im Wesentlichen runde, vorzugsweise kreisrunde, Außenumfangskontur aufweist.

Die Heizeinheit kann in einem in Richtung der Längsmittenachse langgestreckten Abgasführungsgehäuse angeordnet sein, wobei für eine mit dem Abgasstrom besonders effiziente Wechselwirkung vorgeschlagen wird, dass der radial innere Windungsendbereich der Heizeinheit bezüglich des radial äußeren Windungsendbereichs der Heizeinheit in Bezug auf eine Abgashauptströmungsrichtung in dem Abgasführungsgehäuse stromaufwärts angeordnet ist.

Eine derartige Struktur mit in Richtung stromaufwärts angeordnetem radial innerem Windungsendbereich ist besonders dann für eine kompakte Ausgestaltung vorteilhaft, wenn das Abgasführungsgehäuse einen in der Abgashauptströmungsrichtung sich radial erweiternden Gehäusebereich aufweist und die Heizeinheit wenigstens bereichsweise in dem sich radial erweiternden Gehäusebereich angeordnet ist.

Stromabwärts der Heizeinheit kann eine dann auch durch den durch die Heizeinheit erwärmten Abgasstrom in der Startphase erwärmte Abgasbehandlungseinheit, vorzugsweise Katalysatoreinheit oder/und Partikelfiltereinheit, angeordnet sein.

Um die im Inneren eines Abgasführungsgehäuses vorherrschenden Strömungsverhältnisse für eine effiziente Wechselwirkung des Abgasstroms mit der Heizeinheit nutzen zu können, wird vorgeschlagen, dass in wenigstens einem, vorzugsweise jedem Umfangsbereich ein Öffnungswinkel des sich radial erweiternden Gehäusebereichs bezüglich der Längsmittenachse kleiner ist, als ein Heizeinheit-Anstellwinkel einer die Längsmittenachse und wenigstens zwei, vorzugsweise alle Windungsabschnitte der Heizeinheit im Bereich eines Zentrums des Mantelheizelements in dem wenigstens einen Umfangsbereich schneidenden Heizeinheit-Anstelllinie bezüglich der Längsmittenachse.

Dabei kann vorzugsweise weiter vorgesehen sein, dass die Abgasbehandlungseinheit eine in Richtung stromaufwärts orientierte und unter einem Abgasbehandlungseinheit-Anstellwinkel bezüglich der Längsmittenachse geneigte Anströmseite aufweist, und dass in wenigstens einem, vorzugsweise jedem Umfangsbereich, der Heizeinheit-Anstellwinkel kleiner ist, als der Abgasbehandlungseinheit-Anstellwinkel.

Sowohl hinsichtlich der thermischen Wechselwirkung des Abgasstroms mit der in einem Abgasführungsgehäuse angeordneten Heizeinheit, als auch hinsichtlich einer kompakten Bauweise ist es besonders vorteilhaft, wenn der Heizeinheit-Anstellwinkel kleiner oder gleich der Hälfte der Summe aus Öffnungswinkel und Abgasbehandlungseinheit-Anstellwinkel ist.

Eine sehr effiziente Übertragung von Wärme auf den Abgasstrom kann weiter dadurch erreicht werden, dass in jedem Umfangsbereich wenigstens zwei, vorzugsweise alle einander unmittelbar benachbarten Windungsabschnitte der Heizeinheit einander radial überlappen, oder/und dass in wenigstens einem, vorzugsweise in jedem Umfangsbereich wenigstens zwei, vorzugsweise alle einander unmittelbar benachbarten Windungsabschnitte der Heizeinheit einander axial überlappen. Querschnittsbereiche, in welchen der Abgasstrom im Wesentlichen keine thermische Wechselwirkung mit der Heizeinheit hat, können somit weitestgehend vermieden werden.

Um gleichwohl eine zu starke Drosselung des Abgasstroms zu vermeiden, wird weiter vorgeschlagen, dass in wenigstens einem, vorzugsweise jedem Umfangsbereich wenigstens zwei, vorzugsweise alle einander unmittelbar benachbarten Windungsabschnitte der Heizeinheit in Richtung einer die Längsmittenachse und wenigstens zwei, vorzugsweise alle Windungsabschnitte der Heizeinheit im Bereich eines Zentrums des Mantelheizelements in dem wenigstens einen Umfangsbereich schneidenden Heizeinheit-Anstelllinie einander nicht überlappen, vorzugsweise einen Abstand zueinander aufweisen.

Eine Wechselwirkung der Heizeinheit mit dem Abgasstrom auch im zentralen Bereich, also im Bereich der Längsmittenachse, kann dadurch erreicht werden, dass der radial innere Windungsendbereich die Längsmittenachse schneidet.

Bei einem insbesondere hinsichtlich der Integration in ein Abgasführungsgehäuse mit einem sich in der Abgasströmungsrichtung radial erweiternden Gehäuseabschnitt besonders einfach zu realisierenden Aufbau wird vorgeschlagen, dass in wenigstens einem, vorzugsweise jedem Umfangsbereich wenigstens ein Teil der, vorzugsweise alle Windungsabschnitte der Heizeinheit mit einem Zentrum des Mantelheizelements auf einer die Längsmittenachse schneidenden, geradlinig sich erstreckenden Heizeinheit-Anstelllinie liegen. Es wird somit eine im Wesentlichen kegelartige Struktur der Heizeinheit erreicht.

Bei einer alternativen Ausgestaltungsart können in wenigstens einem, vorzugsweise jedem Umfangsbereich wenigstens ein Teil der, vorzugsweise alle Windungsabschnitte der Heizeinheit mit einem Zentrum des Mantelheizelements auf einer die Längsmittenachse schneidenden, beispielsweise bogenartig gekrümmten Heizeinheit-Anstelllinie liegen.

Um die Heizeinheit stabil in einer Abgasanlage bzw. einem Abgasführungsgehäuse einer Abgasanlage unterbringen zu können, wird weiter vorgeschlagen, dass an wenigstens einer, vorzugsweise beiden axialen Seiten der Heizeinheit eine die Heizeinheit axial abstützende Trägerstruktur angeordnet ist.

Die vorliegende Erfindung betrifft ferner einen Abgasanlage für eine Brennkraftmaschine, umfassend wenigstens eine Abgasheizanordnung nach einem der nachstehenden Ansprüche.

Die vorliegende Erfindung wird nachfolgend mit Bezug auf die beiliegenden Figuren detailliert beschrieben. Es zeigt:
- Fig. 1: in perspektivischer Darstellung eine Heizeinheit einer Abgasheizanordnung stromaufwärts bezüglich einer Abgasbehandlungseinheit;
- Fig. 2: eine Längsschnittansicht einer die Heizeinheit und die Abgasbehandlungseinheit der Fig. 1 umfassenden Abgasbehandlungsanordnung;
- Fig. 3: eine Teil-Längsschnittansicht, welche in prinzipartiger Darstellung den Aufbau der Abgasbehandlungsanordnung der Fig. 2 darstellt;
- Fig. 4: eine Detailansicht von drei in einem Umfangsbereich einander unmittelbar benachbart positionierten Windungsabschnitten einer Heizeinheit der Abgasheizanordnung der Fig. 2;
- Fig. 5: eine der Fig. 4 entsprechende Darstellung, welche alternative Ausgestaltungen veranschaulicht.
- Fig. 6: eine Seitenansicht einer geradlinig sich erstreckend angeordneten Heizeinheit mit einem Mantelheizelement und einer einen Mantel derselben umgebenden Wärmeübertragungsflächenformation;
- Fig. 7: in prinzipartiger Darstellung eine die Abgasheizanordnung der Fig. 2 enthaltenden Abgasanlage für eine Brennkraftmaschine.

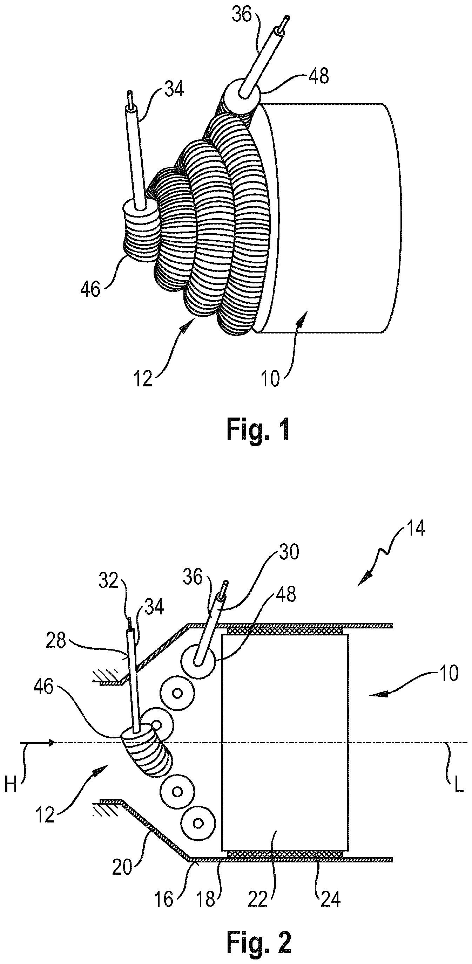

Die Fig. 1 zeigt in perspektivischer Ansicht eine Abgasbehandlungseinheit 10 sowie eine Heizeinheit 12 umfassende Baugruppe einer in Fig. 2 dargestellten Abgasheizanordnung 14. Die Abgasheizanordnung 14 umfasst ferner ein Abgasführungsgehäuse 16 mit einem die Abgasbehandlungseinheit 10 aufnehmenden, im Wesentlichen zylindrischen Gehäusebereich 18 und einen in einer Abgashauptströmungsrichtung A stromaufwärts an den im Wesentlichen zylindrischen Gehäusebereich 18 anschließenden, in der Abgashauptströmungsrichtung A sich radial bezüglich einer Längsmittenachse L erweiternden Gehäusebereich 20. Die Abgasbehandlungseinheit 10, welche beispielsweise als Katalysatoreinheit aufgebaut sein kann, kann einen mit katalytisch wirksamem Material beschichteten Katalysatorblock 22 aufweisen, der unter Zwischenlagerung einer Fasermatte 24 oder dergleichen in dem im Wesentlichen zylindrischen Gehäusebereich 18 des Abgasführungsgehäuses 16 gehalten ist.

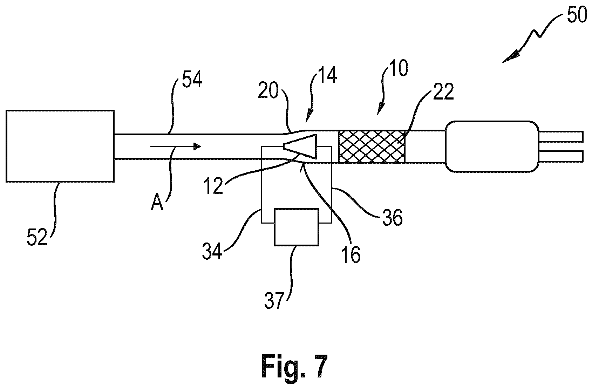

Die Heizeinheit 12 ist an einer Anströmseite 26 der Abgasbehandlungseinheit 10 liegend stromaufwärts bezüglich dieser angeordnet und umfasst ein grundsätzlich langgestrecktes Mantelheizelement 28. Das Mantelheizelement 28 ist mit einem im Allgemeinen mit Metallmaterial aufgebauten Mantel 30 und wenigstens einem in dem Mantel 30 verlaufenden Heizleiter 32 aufgebaut. Um eine elektrische Isolierung zwischen dem Heizleiter 32 und dem Mantel 30 zu realisieren, ist der Heizleiter 32 in dem Mantel 30 in beispielsweise pulverartiges, elektrisch isolierendes Material eingebettet. In den beiden außerhalb des Abgasführungsgehäuses 16 liegenden Anschlussendbereichen 34, 36 kann das Mantelheizelement 28 an eine Spannungsquelle 37 (siehe Fig. 7) angeschlossen werden, so dass durch Anlegen einer elektrischen Spannung an die beiden Anschlussendbereiche 34, 36 der Heizleiter 32 und über diesen der Mantel 30 erwärmt wird.

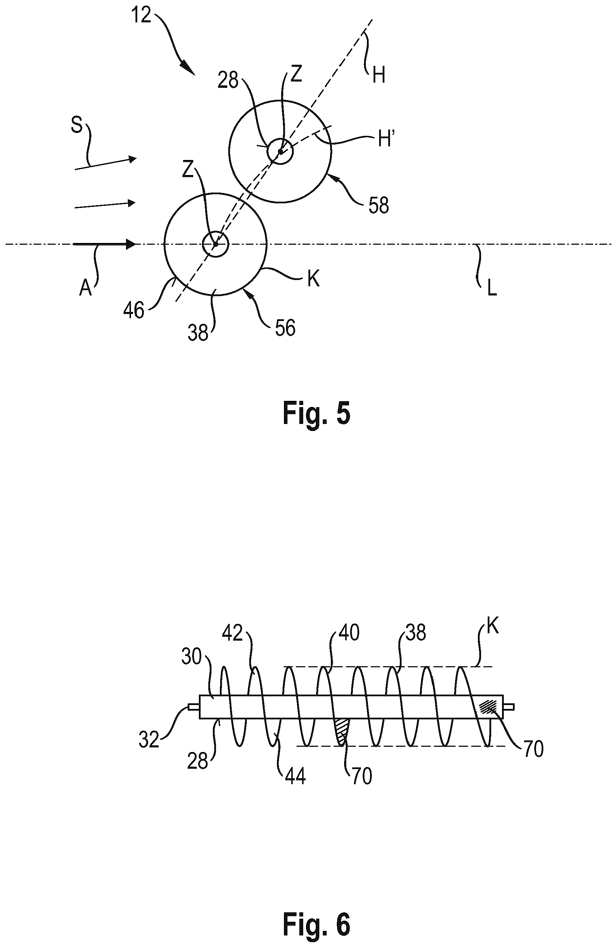

Am Außenumfang des in den Stromfluss nicht integrierten Mantels 30 des Mantelheizelements 28 ist eine allgemein mit 38 bezeichnete Wärmeübertragungsflächenformation angebunden. Die Wärmeübertragungsflächenformation 38 dient dazu, die zur Abgabe von Wärme auf die Heizeinheit 12 umströmendes Abgas zur Verfügung stehende Oberfläche zu vergrößern. Ein Beispiel eines von einer derartigen Wärmeübertragungsflächenformation 38 umgebenden Mantelheizelements 28 ist in Fig. 6 dargestellt. Die Wärmeübertragungsflächenformation weist in dem dargestellten Ausgestaltungsbeispiel ein schraubenartig gewundenes und entlang des Mantels 30 des Mantelheizelements 28 in einer Längsrichtung desselben sich erstreckendes Wärmeübertragungselement 40 auf. Mit seiner schraubenartig gewundenen Struktur stellt das beispielsweise ebenfalls aus Metallmaterial aufgebaute Wärmeübertragungselement 40 zwei wendelartig in der Längsrichtung des Mantelheizelements 28 verlaufende Wärmeübertragungsflächen 42, 44 bereit. Das Wärmeübertragungselement 40 bildet eine durch Konturlinien K nach radial außen bezüglich des Heizleiters 32 umgrenzte, vorzugsweise kreisrunde Außenumfangskontur bereit.

Es ist darauf hinzuweisen, dass die Wärmeübertragungsflächenformation 38 auch mit anderer Struktur aufgebaut sein könnte. So könnte diese beispielsweise eine Mehrzahl von in der Längsrichtung des Mantelheizelements 28 aufeinanderfolgend angeordneten, scheibenartigen Wärmeübertragungsflächenformationen beispielsweise mit kreisrunder Außenumfangskontur umfassen, die beispielsweise in einem zentralen Bereich vom Mantelheizelement durchsetzt sind. Bei einer weiteren alternativen Ausgestaltung könnte die Wärmeübertragungsflächenformation 38 ein mäanderartig gewundenes Wärmeübertragungselement umfassen, das eine Mehrzahl von bei geradliniger Erstreckung des Mantel Heizelements im Wesentlichen parallel zueinander angeordneten Wärmeübertragungselementabschnitten umfasst. Diese können beispielsweise zwischen jeweiligen die benachbarten Wärmeübertragungselementabschnitte miteinander verbindenden Krümmungsabschnitten in zentralen Bereichen von dem Mantelheizelement 28 durchsetzt sein.

Die Verbindung des Mantelheizelements 28 mit der Wärmeübertragungsflächenformation 38 kann beispielsweise dadurch hergestellt werden, dass die Wärmeübertragungsflächenformation 38 mit einem Formgedächtnismaterial hergestellt wird. Die vom Mantelheizelement 28 zu durchsetzenden Öffnungen, beispielsweise im zentralen Bereich der Wärmeübertragungsflächenformation, können durch Kaltumformung so bereitgestellt werden, dass sie einen geringfügig größeren Durchmesser aufweisen, als das Mantelheizelement 28. Nach dem Einschieben des Mantelheizelements 28 in derartige Öffnungen kann durch Erwärmen der mit dem Formgedächtnismaterial aufgebauten Wärmeübertragungsflächenformation 38 dieses sich wieder zusammenziehen, so dass eine hohe Klemmkraft bezüglich des Mantelheizelements erreicht wird und somit eine feste und haltbare Verbindung ohne der Notwendigkeit, beispielsweise eine materialschlüssige Anbindung erzeugen zu müssen, erreicht wird.

Die Fig. 1 und 2 zeigen deutlich, dass die Heizeinheit mit dem Mantelheizelement 28 und der dieses umgebenden Wärmeübertragungsflächenformation 38 die Längsmittenachse L spiralartig gewunden umgebend angeordnet ist, so dass entlang der gewundenen Struktur des von der Wärmeübertragungsflächenformation 38 umgebenen Mantelheizelements 28 der Radialabstand zur Längsmittenachse L zunimmt. Weiter ist die Heizeinheit 12 so aufgebaut, dass bei der spiralartig gewundenen Struktur ein radial innerer Windungsendbereich 46 in Richtung der Längsmittenachse L axial versetzt liegt zu einem radial äußeren Windungsendbereich 48. Dabei ist in Fig. 2 zu erkennen, dass der axiale Versatz derart gewählt ist, dass der radial innere Windungsendbereich 46 bezüglich des radial äußeren Windungsendbereichs 48 in Richtung stromaufwärts, also entgegen zur Abgashauptströmungsrichtung A versetzt ist und somit in größerem Abstand zur Anströmseite 26 der Abgasbehandlungseinheit 10 positioniert ist.

Mit dieser im Wesentlichen kegelartigen Struktur der Heizeinheit 12 werden verschiedene Vorteile in Betrieb der Heizeinheit 12 bzw. einer damit aufgebauten und in Fig. 7 in prinzipartiger Darstellung gezeigten Abgasanlage 50 für eine Brennkraftmaschine 52 erreicht. Einerseits ist zu erkennen, dass die Heizeinheit 12 mit ihrer axial ausgedehnten, spiralartigen Struktur so positioniert ist, dass sie zumindest bereichsweise in dem radial sich erweiternden und beispielsweise ebenfalls mit kegelartiger bzw. konusartiger Struktur aufgebauten Gehäusebereich 20 positioniert ist. Somit wird eine kompakte Bauart gewährleistet, bei welcher das beispielsweise durch ein Abgasführungsrohr 54 in der Abgashauptströmungsrichtung A heranströmende Abgas definiert in Richtung zu der radial weiter ausgedehnten Anströmseite 26 der Abgasbehandlungseinheit 10 unter Umströmung der Heizeinheit 12 geleitet wird. Es wird somit auch eine nachfolgend noch detaillierter erläuterte thermische Wechselwirkung der Heizeinheit 12 mit dem zur Abgasbehandlungseinheit 10 geleiteten Abgasstrom gewährleistet. Dabei kann für eine effiziente Ausnutzung des zur Verfügung stehenden Bauraums beispielsweise auch vorgesehen sein, dass der auch den radial äußeren Windungsendbereich 48 umfassende letzte Windungsabschnitt der spiralartigen Struktur der Heizeinheit 12 im Wesentlichen vollständig in den im Wesentlichen zylindrischen Gehäusebereich 18 des Abgasführungsgehäuses 16 positioniert ist, so dass auch im radial äußersten Bereich der Abgasbehandlungseinheit 10 eine thermische Wechselwirkung der Heizeinheit 12 mit dem Abgasstrom stromaufwärts bezüglich der Abgasbehandlungseinheit 10 gewährleistet werden kann.

Weiter führt die spiralartig gewundene, axial ausgedehnte Struktur der Heizeinheit 12 dazu, dass die gesamt zur Verfügung gestellte Länge des von der Wärmeübertragungsflächenformation 38 umgebenen Mantelheizelements 28 im Vergleich zu einer im Wesentlichen in einer Ebene, also nicht axial ausgedehnten spiralartigen Struktur deutlich vergrößert werden kann. Dadurch wird die zur Wärmeübertragung auf das Abgas zur Verfügung stehende Oberfläche des Mantels 30 und der Wärmeübertragungsflächenformation 38 vergrößert, was zu einer effizienteren Erwärmung des auf die Abgasbehandlungseinheit 10 zu strömenden Abgasstroms beiträgt.

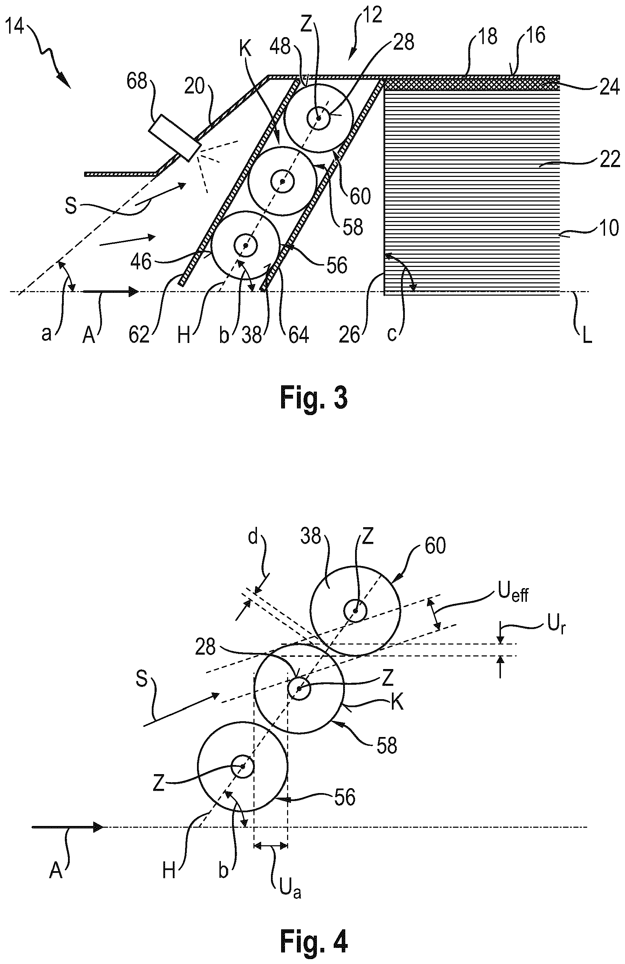

Mit Bezug auf die Fig. 3 bis 5 werden nachfolgend konstruktive Ausgestaltungsaspekte der erfindungsgemäß aufgebauten Abgasheizanordnung 14 erläutert.

Die Fig. 3 zeigt in einer die Längsmittenachse L enthaltenden Ebene, welche einen Umfangsbereich der Abgasheizanordnung 14 bzw. der Heizeinheit 12 darstellt, drei einander benachbarte Windungsabschnitte 56, 58, 60 der Heizeinheit 12, wobei der in Fig. 3 oben und am weitesten in Abstand zur Längsmittenachse L positionierte Windungsabschnitt 60 den radial äußeren Windungsendbereich 48 bereitstellt und der unten und somit am nächstliegend zur Längsmittenachse L dargestellte Windungsabschnitt 56 den radial inneren Windungsendbereich 46 bereitstellt. Bei jedem der Windungsabschnitte 56, 58, 60 liegt ein beispielsweise durch den Heizleiter 32 bzw. dessen Mittelpunkt definiertes Zentrum Z des Mantelheizelements 28 auf einer Heizeinheit-Anstelllinie H, welche sich unter einem Heizeinheit-Anstellwinkel b bezüglich der Längsmittenachse L und somit auch der Abgashauptströmungsrichtung A geradlinig von radial innen nach radial außen erstreckt. Die in dieser Art angeordneten Windungsabschnitte 56, 58, 60 der Heizeinheit 12 sind zwischen zwei axial beidseits davon angeordneten Trägerstrukturen 62, 64 gehalten bzw. axial abgestützt. Um den Hindurchtritt von Abgas zu ermöglichen, können diese Trägerstrukturen 62, 64 gitterartig oder kreuzartig ausgebildet sein und in ihrem radial äußeren Bereich am Abgasführungsgehäuse 16 festgelegt sein.

Die durch den Heizeinheit-Anstellwinkel b repräsentierte Neigung der Heizeinheit-Anstelllinie H, welche im Wesentlichen auch den Kegelwinkel der kegelartigen Struktur der Heizeinheit 12 repräsentiert, ist auch unter Berücksichtigung der Windungs-Ganghöhe der Heizeinheit 12 so gewählt, dass die in einem bzw. in jedem Umfangsbereich um die Längsmittenachse L einander benachbarten Windungsabschnitte 56, 58, 60 sich in radialer Richtung und in axialer Richtung überlappen. Dabei wird der Überlapp betrachtet jeweils mit Bezug auf die durch die Konturlinien K repräsentierten Außenumfangskonturen der Windungsabschnitte der Heizeinheit 12, welche im dargestellten Ausgestaltungsbeispiel durch die Außenumfangskontur der Wärmeübertragungsflächenformation 38 definiert ist bzw. sind und im dargestellten Ausgestaltungsbeispiel somit eine im Wesentlichen jeweils kreisrunde Außenumfangskontur aufweisen. Es ergibt sich somit ein radialer Überlapp Uᵣ zwischen den einander unmittelbar benachbarten Windungsabschnitten 56, 58, 60, und es ergibt sich ein axialer Überlapp Uₐ der einander unmittelbar benachbarten Windungsabschnitte 56, 58, 60. Ferner sind die Windungsabschnitte 56, 58, 60 so positioniert, dass in einem bzw. jedem Umfangsbereich die auf der Heizeinheit-Anstelllinie H liegenden Zentren Z in Richtung der Heizeinheit-Anstelllinie H einen derartigen Abstand zueinander aufweisen, dass die einzelnen Windungsabschnitte 56, 58, 60 einander nicht überlappen, vorteilhafterweise einen Abstand b zueinander aufweisen.

Unter Berücksichtigung der Strömungsführung in dem Abgasführungsgehäuse 16 ist der Heizeinheit-Anstellwinkel b bezüglich der Längsmittenachse L so gewählt, dass dieser größer ist als ein Öffnungswinkel a des radial sich erweiternden Gehäusebereichs 20 des Abgasführungsgehäuses 12. Weiter ist der Heizeinheit-Anstellwinkel b so gewählt, dass er kleiner ist, als ein Abgasbehandlungseinheit-Anstellwinkel c der Anströmseite 26 der Abgasbehandlungseinheit 10. Dabei kann bei einer im Wesentlichen planen Anströmseite 26 der Abgasbehandlungseinheit-Anstellwinkel c 90° betragen.

Es hat sich als vorteilhaft erwiesen, wenn der Heizeinheit-Anstellwinkel b etwa mittig zwischen dem Abgasbehandlungseinheit-Anstellwinkel c und dem Öffnungswinkel a des radial sich erweiternden Gehäusebereichs 20 liegt oder kleiner ist, so dass der Heizeinheit-Anstellwinkel b kleiner oder gleich der Hälfte der Summe des Abgasbehandlungseinheit-Anstellwinkels c und des Öffnungswinkels a des radial sich erweiternden Gehäusebereichs 20 ist. es ist darauf hinzuweisen, dass hinsichtlich dieser Winkel bei einer von einer im Wesentlichen rotationssymmetrischen Ausgestaltung abweichenden Struktur jeweils -bezogen auf die Umfangsrichtung- ein mittlerer Winkel betrachtet werden kann oder die in definierten Bereichen in Richtung der Längsmittenachse L und in Umfangsrichtung miteinander zu vergleichenden Winkel betrachtet werden.

Mit einer derartigen kegelartigen Struktur wird gewährleistet, dass die Abgasströmung, welche mit zunehmendem Abstand zur Längsmittenachse L eine von der Abgashauptströmungsrichtung A zunehmend abweichend und zunehmend nach radial außen orientierte Strömungsrichtung aufweist, die Heizeinheit 12 derart anströmt, dass eine möglichst effiziente thermische Wechselwirkung zwischen dem Abgas und der Heizeinheit 12 erreicht wird. Wesentlich ist dabei, dass mit dem nach radial außen zunehmend von der Abgashauptströmungsrichtung A abweichenden Abgasstrom bzw. dessen Strömungsrichtung S bezogen auf die Positionierung der einander überlappenden Windungsabschnitte 56, 58, 60 sich ein effektiver Überlapp U_{eff} ergibt, welcher deutlich größer ist, als der radiale Überlapp Uᵣ bzw. auch der axiale Überlapp Uₐ. Somit wird in jedem der von Abgas umströmten Windungsabschnitte eine effiziente thermische Wechselwirkung des Abgasstroms mit dem in einem jeweiligen Windungsabschnitt bzw. einem jeweiligen Umfangsbereich positionierten Oberflächenbereich sowohl des Mantelheizelements 28, als auch der Wärmeübertragungsflächenformation 38 gewährleistet. Gleichwohl wird durch den zwischen den einzelnen Windungsabschnitten bestehenden Abstand d gewährleistet, dass eine übermäßige Strömungsverdämmung bzw. ein übermäßig großer Strömungswiderstand für den durch die Heizeinheit 12 hindurchtretenden Abgasstrom nicht auftritt. Auch wird durch diesen Abstand d aufgrund des Vermeidens eines gegenseitigen Kontakts der einander unmittelbar benachbarten Windungsabschnitte 56, 58, 60 eine gute Haltbarkeit der so aufgebauten Heizeinheit 12 erreicht. Bereiche, bei welchen der Abgasstrom im Wesentlichen ohne thermische Wechselwirkung mit irgendeinem der Windungsabschnitte nicht auftritt, sind jedoch weitestgehend vermieden.

Es ist dabei darauf hinzuweisen, dass der effektive Überlapp U_{eff} wesentlich bestimmt ist durch den Heizeinheit-Anstellwinkel b. Je kleiner dieser Winkel ist, desto spitzer wird die kegelartige Struktur der Heizeinheit 12 und desto kleiner wird der Winkel zwischen der Heizeinheit-Anstelllinie H und der Strömungsrichtung S des Abgasstroms in von der Längsmittenachse L weiter radial entfernten Bereichen.

Auch ein möglichst kleiner Abstand d trägt zu einem großen effektiven Überlapp U_{eff} bei.

Verschiedene Abwandlungen der Heizeinheit 12 sind in der Darstellung der Fig. 5 zu erkennen. Man sieht in Fig. 5, dass der radial innere und auch den radial inneren Windungsendbereich 46 bereitstellende Windungsabschnitt 56 weiter radial innen positioniert ist, so dass dieser beispielsweise im Bereich des Zentrums Z des Mantelheizelements 28 von der Längsmittenachse L geschnitten wird. Dies gewährleistet, dass auch im zentralen Bereich kein Querschnitt vorhanden ist, in welchem Abgas ohne thermische Wechselwirkung mit der Heizeinheit 12 hindurchströmen könnte.

Weiter veranschaulicht die Fig. 5, dass, wiederum bezogen auf einen Umfangsbereich, die Zentren Z des Mantelheizelements 28 in einem jeweiligen Windungsabschnitt 56, 58 nicht notwendigerweise auf einer geradlinig sich erstreckenden Heizeinheit-Anstelllinie H liegen müssen, sondern beispielsweise auch auf einer gekrümmten, vorzugsweise bogenförmig gekrümmten Heizeinheit-Anstelllinie H' liegen können, welche, so wie in Fig. 5 dargestellt, bezogen auf den Abgasstrom konvex gewölbt sein kann oder aber auch konkav gewölbt sein kann. Es ist zu betonen, dass selbstverständlich die Positionierung der Zentren Z auf einer derartig gekrümmten Heizeinheit-Anstelllinie H' sich dann in der Gesamtstruktur der Heizeinheit 12 abbildet, wenn mehr als zwei Windungsabschnitte betrachtet werden, da durch zwei Windungsabschnitte selbstverständlich immer eine geradlinig sich erstreckende Linie gezogen werden kann.

Mit einer derartigen Positionierung der Zentren der einzelnen Windungsabschnitte 56, 58 auf einer gekrümmten Heizeinheit-Anstelllinie H' liegt auch die durch die Außenumfangskontur bzw. Konturlinie K der Wärmeübertragungsflächenformation 38 jeweils definierte Hüllfläche der gesamten Heizeinheit 12 auf eine entsprechend konvex oder konkav verlaufenden Linie, jeweils wieder bezogen auf einen Umfangsbereich. Die vorangehend unter Bezug auf die Fig. 3 und 4 erläuterte Anstellung einer derartigen Linie H' kann beispielsweise im radial inneren Bereich, also dort, wo eine derartige Heizeinheit-Anstelllinie H' die Längsmittenachse L schneidet, betrachtet werden, kann jedoch auch anhand eines mittleren Anstellwinkels einer derartigen gekrümmten Heizeinheit-Anstelllinie H' betrachtet werden.

Ferner ist darauf hinzuweisen, dass aus Symmetriegründen vorzugsweise über den gesamten Umfang in der Längsmittenachse L jeweils im Wesentlichen die gleiche Struktur, also der näherungsweise gleiche Verlauf der Heizeinheit-Anstelllinie H bzw. H' vorgesehen werden kann.

Mit der erfindungsgemäß aufgebauten Abgasheizanordnung 14, welche die mit spiralartig und axial ausgedehnt gewundener Struktur aufgebaute Heizeinheit 12 stromaufwärts einer Abgasbehandlungseinheit 10 umfasst, wird gewährleistet, dass insbesondere in einer Startphase der Brennkraftmaschine 52 das auf die Abgasbehandlungseinheit 10 zu strömende Abgas effizient erwärmt wird und diese Wärme dann auch in die Abgasbehandlungseinheit bzw. deren katalytisch wirksames Material einträgt. Somit kann die Zeitdauer, in welcher in einer Startphase des Betriebs der Brennkraftmaschine 52 eine Abgasbehandlungseinheit 10 nicht ausreichend warm ist, um die dort zu realisierende katalytische Reaktion durchzuführen, deutlich verkürzt werden.

Dabei kann die Effizienz der Abgasheizanordnung 14 bzw. der Heizeinheit 12 weiter dadurch verbessert werden, dass auf die Heizeinheit 12 Kohlenwasserstoff, also beispielsweise auch der in der Brennkraftmaschine 52 verwendete Kraftstoff, aufgespritzt wird. Beispielsweise kann dies mit einem stromaufwärts bezüglich der Heizeinheit 12 positionierten und in Fig. 3 dargestellten Injektor 68 erfolgen. Der auf die Heizeinheit 12 im Heizbetrieb derselben auftreffende Kohlenwasserstoff wird aufgrund der dort vorherrschenden Temperatur umgesetzt, wodurch zusätzliche Reaktionswärme freigesetzt wird, die über den Abgasstrom in die stromabwärts positionierte Abgasbehandlungseinheit 10 transportiert werden kann. Insbesondere dann, wenn die Brennkraftmaschine 52 eine Diesel-Brennkraftmaschine ist und die Abgasbehandlungseinheit 10 einen SCR-Katalysator oder/und einen Diesel-Partikelfilter umfasst, können damit diese Systembereiche sehr schnell auf Betriebstemperatur gebracht werden. Dieser Effekt kann auch dadurch erreicht werden, dass die Brennkraftmaschine 52 derart betrieben wird, dass durch eine definierte Zündwinkeleinstellung ein Teil des Kraftstoffs darin nicht verbrannt, sondern unverbrannt ausgestoßen wird und somit mit dem Abgasstrom auf die Heizeinheit 12 zu transportiert wird.

Um insbesondere in der Startphase des Betriebs der Brennkraftmaschine 52 eine weitere Verringerung des Schadstoffausstoßes erreichen zu können, kann die Heizeinheit 12 im Bereich der Außenoberfläche des Mantels 30 oder/und an der Wärmeübertragungsflächenformation 38 mit einer Oberfläche mit katalytisch wirksamem Material 70 bereitgestellt sein. Da bei Erregung des Mantelheizelements 28 dieses katalytisch wirksame Material 70 sehr schnell erwärmt und somit auf eine für die Durchführung der katalytischen Reaktion erforderliche Temperatur gebracht werden kann, wird auf diese Art und Weise bereits stromaufwärts der Abgasbehandlungseinheit 10 eine katalytische Umsetzung und somit eine Verringerung des Schadstoffanteils im Abgas erreicht.

Umfasst die Abgasbehandlungseinheit 10 bei einer als Benzinmotor ausgebildeten Brennkraftmaschine 52 einen Drei-Wege-Katalysator, kann das katalytisch wirksame Material durch eine Beschichtung beispielsweise mit Platin oder/und Palladium oder/und Rhodium bereitgestellt werden. Ist die Brennkraftmaschine 52 ein Dieselmotor und dementsprechend die Abgasbehandlungseinheit ein Diesel-Oxidationskatalysator, kann das katalytisch wirksame Material beispielsweise durch eine Beschichtung mit Platin oder/und Palladium bereitgestellt sein. Eine entsprechende Beschichtung kann auch vorgesehen sein, wenn eine Anwendung als NOx-Speicherkatalysator bei einer als Dieselmotor aufgebauten Brennkraftmaschine 52 vorgesehen ist, wobei als Speicherkomponente beispielsweise eine Barium enthaltende Verbindung vorgesehen sein kann.

Umfasst die Abgasbehandlungseinheit 10 einen SCR-Katalysator in Zuordnung zu einer als Dieselmotor aufgebauten Brennkraftmaschine 52, kann das katalytisch wirksame Material ein Hydrolyse-Katalysator sein, welcher die stromaufwärts des SCR-Katalysators durchzuführende Aufbereitung einer Harnstoff/Wasser-Lösung realisiert. Beispielsweise kann hierfür eine Beschichtung vorgesehen sein, welche mit Titandioxid, Zirkonoxid oder/und Aluminiumoxid aufgebaut ist. Bei Zusammenwirkung mit einer einen SCR-Katalysator umfassenden Abgasbehandlungseinheit 10 kann das katalytisch wirksame Material 70 beispielsweise auch mit Fe-Zeolithen, Cu-Zeolithen oder Vanadium-Oxid (z. B. Vanadium-Pentoxid) aufgebaut sein. Insbesondere bei der Beschichtung mit derartigen Oxiden ist es auch möglich, das katalytisch wirksame Material als Mischoxid-Beschichtung vorzusehen.

Eine derartige Beschichtung kann beispielsweise dadurch aufgebracht werden, dass auf der zu beschichtenden Oberfläche des Mantel 30 oder/und der Wärmeübertragungsflächenformation 38 zunächst ein so genannter Washcoat mit einem vergleichsweise hohen Al-Anteil aufgetragen wird, beispielsweise FeCr-Alloy 1.4767 mit einem Al-Anteil von etwa 5%, wobei die zu beschichtende Oberfläche auch einer Temperaturbehandlung unterzogen werden kann. Mit diesem Washcoat wird eine poröse oxidkeramische Beschichtung erreicht, die aufgrund ihrer porösen Struktur eine große innere Oberfläche bereitstellt, auf welche dann die Beschichtung mit dem katalytisch wirksamen Material 70 beispielsweise durch Imprägnierung aufgetragen werden kann.

Bei der vorangehend detailliert beschriebenen Heizeinheit 12 ist die Struktur bzw. Positionierung der einander jeweils benachbarten Windungsabschnitte jeweils mit Bezug auf die Außenumfangskontur der Wärmeübertragungsflächenformation 38 erläutert. Dies betrifft insbesondere auch die axial und radial sich überlappende Struktur einander unmittelbar benachbarter Windungsabschnitte 56, 58, 60. Eine derartige Struktur insbesondere mit der Wärmeübertragungsflächenformation 38 ist zum Bereitstellen einer größtmöglichen Oberfläche zur Übertragung von Wärme auf den Abgasstrom besonders vorteilhaft. Gleichwohl sei darauf hingewiesen, dass die spiralartig gewundene und axial ausgedehnte Struktur mit axial und radial sich überlappenden Windungsabschnitten der Heizeinheit 12 grundsätzlich auch dann realisiert sein kann, wenn diese lediglich das Mantelheizelement 28, jedoch keine am Mantel 30 vorgesehene Wärmeübertragungsflächenformation umfasst. Die axial und radial sich überlappende Beziehung einander unmittelbar benachbarter Windungsabschnitte ist dann jeweils unter Bezugnahme auf die Außenumfangskontur des Mantels 30 einzustellen.

## Patentansprüche

1. Abgasheizanordnung, umfassend eine Heizeinheit (12) mit einem Mantelheizelement (28) mit einem Mantel (30) und wenigstens einem in dem Mantel verlaufenden und von Isoliermaterial umgebenen Heizleiter (32), wobei die Heizeinheit (12) eine Längsmittenachse (L) spiralartig umgebend gewunden ist, **dadurch gekennzeichnet, dass** ein radial innerer Windungsendbereich (46) der Heizeinheit (12) bezüglich eines radial äußeren Windungsendbereichs (48) der Heizeinheit (12) in Richtung der Längsmittenachse (L) versetzt ist, und dass in wenigstens einem Umfangsbereich wenigstens zwei einander unmittelbar benachbarte Windungsabschnitte (56, 58, 60) der Heizeinheit (12) einander radial überlappen.

2. Abgasheizanordnung nach Anspruch 1, **dadurch gekennzeichnet, dass** die Heizeinheit (12) eine an dem Mantel (30) getragene Wärmeübertragungsflächenformation (38) umfasst.

3. Abgasheizanordnung nach Anspruch 2, **dadurch gekennzeichnet, dass** die Heizeinheit (12) im Bereich des Mantels (30) oder/und im Bereich der Wärmeübertragungsflächenformation (38) eine mit katalytisch wirksamem Material (70) aufgebaute Außenoberfläche aufweist.

4. Abgasheizanordnung nach Anspruch 2 oder 3, **dadurch gekennzeichnet, dass** die Wärmeübertragungsflächenformation (38) wenigstens ein das Mantelheizelement (28) schraubenwindungsartig umgebendes Wärmeübertragungselement (40) umfasst, oder/und dass die Wärmeübertragungsflächenformation (38) eine Mehrzahl von in einer Längsrichtung des Mantelheizelements aufeinanderfolgend angeordneten, scheibenartigen Wärmeübertragungselementen umfasst, oder/und das die Wärmeübertragungsflächenformation (38) wenigstens ein entlang des Mantelheizelements (28) mäanderartig verlaufendes, in jeweiligen Wärmeübertragungselementabschnitten vom Mantelheizelement durchsetztes Wärmeübertragungselement umfasst, oder/und dass die Wärmeübertragungsflächenformation (38) eine im Wesentlichen runde, vorzugsweise kreisrunde, Außenumfangskontur aufweist.

5. Abgasheizanordnung nach einem der vorangehenden Ansprüche, **dadurch gekennzeichnet, dass** die Heizeinheit (12) in einem in Richtung der Längsmittenachse (L) langgestreckten Abgasführungsgehäuse (16) angeordnet ist, und dass der radial innere Windungsendbereich (46) der Heizeinheit (12) bezüglich des radial äußeren Windungsendbereichs (48) der Heizeinheit (12) in Bezug auf eine Abgashauptströmungsrichtung (A) in dem Abgasführungsgehäuse (16) stromaufwärts angeordnet ist.

6. Abgasheizanordnung nach Anspruch 5, **dadurch gekennzeichnet, dass** das Abgasführungsgehäuse (16) einen in der Abgashauptströmungsrichtung (A) sich radial erweiternden Gehäusebereich (20) aufweist, und dass die Heizeinheit (12) wenigstens bereichsweise in dem sich radial erweiternden Gehäusebereich (20) angeordnet ist, oder/und dass stromabwärts der Heizeinheit (12) eine Abgasbehandlungseinheit (10), vorzugsweise Katalysatoreinheit oder/und Partikelfiltereinheit, angeordnet ist.

7. Abgasheizanordnung nach Anspruch 6, **dadurch gekennzeichnet, dass** in wenigstens einem, vorzugsweise jedem Umfangsbereich ein Öffnungswinkel (a) des sich radial erweiternden Gehäusebereichs (20) bezüglich der Längsmittenachse (L) kleiner ist, als ein Heizeinheit-Anstellwinkel (b) einer die Längsmittenachse (L) und wenigstens zwei, vorzugsweise alle Windungsabschnitte (56, 58, 60) der Heizeinheit (12) im Bereich eines Zentrums (Z) des Mantelheizelements (28) in dem wenigstens einen Umfangsbereich schneidenden Heizeinheit-Anstelllinie (H) bezüglich der Längsmittenachse (L).

8. Abgasheizanordnung nach Anspruch 7, **dadurch gekennzeichnet, dass** die Abgasbehandlungseinheit (10) eine in Richtung stromaufwärts orientierte und unter einem Abgasbehandlungseinheit-Anstellwinkel (c) bezüglich der Längsmittenachse (L) geneigte Anströmseite (26) aufweist, und dass in wenigstens einem, vorzugsweise jedem Umfangsbereich, der Heizeinheit-Anstellwinkel (b) kleiner ist, als der Abgasbehandlungseinheit-Anstellwinkel (c).

9. Abgasheizanordnung nach Anspruch 8, **dadurch gekennzeichnet, dass** der Heizeinheit-Anstellwinkel (b) kleiner oder gleich der Hälfte der Summe aus Öffnungswinkel (a) und Abgasbehandlungseinheit-Anstellwinkel ist.

10. Abgasheizanordnung nach einem der vorangehenden Ansprüche, **dadurch gekennzeichnet, dass** in jedem Umfangsbereich wenigstens zwei, vorzugsweise alle einander unmittelbar benachbarten Windungsabschnitte (56, 58, 60) der Heizeinheit (12) einander radial überlappen, oder/und dass in wenigstens einem, vorzugsweise in jedem Umfangsbereich wenigstens zwei, vorzugsweise alle einander unmittelbar benachbarten Windungsabschnitte (56, 58, 60) der Heizeinheit (12) einander axial überlappen.

11. Abgasheizanordnung nach einem der vorangehenden Ansprüche, **dadurch gekennzeichnet, dass** in wenigstens einem, vorzugsweise jedem Umfangsbereich wenigstens zwei, vorzugsweise alle einander unmittelbar benachbarten Windungsabschnitte (56, 58, 60) der Heizeinheit (12) in Richtung einer die Längsmittenachse (L) und wenigstens zwei, vorzugsweise alle Windungsabschnitte (56, 58, 60) der Heizeinheit (12) im Bereich eines Zentrums (Z) des Mantelheizelements (28) in dem wenigstens einen Umfangsbereich schneidenden geradlinig sich erstreckenden Heizeinheit-Anstelllinie (H) einander nicht überlappen, vorzugsweise einen Abstand (d) zueinander aufweisen.

12. Abgasheizanordnung einem der vorangehenden Ansprüche, **dadurch gekennzeichnet, dass** der radial innere Windungsendbereich (46) die Längsmittenachse (L) schneidet.

13. Abgasheizanordnung nach einem der vorangehenden Ansprüche, **dadurch gekennzeichnet, dass** in wenigstens einem, vorzugsweise jedem Umfangsbereich wenigstens ein Teil der, vorzugsweise alle Windungsabschnitte (56, 58, 60) der Heizeinheit (12) mit einem Zentrum (Z) des Mantelheizelements (28) auf einer die Längsmittenachse (L) schneidenden, geradlinig sich erstreckenden Heizeinheit-Anstelllinie (H) liegen.

14. Abgasheizanordnung nach einem der Ansprüche 1-12, **dadurch gekennzeichnet, dass** in wenigstens einem, vorzugsweise jedem Umfangsbereich wenigstens ein Teil der, vorzugsweise alle Windungsabschnitte (56, 58) der Heizeinheit (12) mit einem Zentrum (Z) des Mantelheizelements (28) auf einer die Längsmittenachse (L) schneidenden, vorzugsweise bogenartig gekrümmten Heizeinheit-Anstelllinie (H') liegen.

15. Abgasheizanordnung nach einen der vorangehenden Ansprüche, **dadurch gekennzeichnet, dass** an wenigstens einer, vorzugsweise beiden axialen Seiten der Heizeinheit (12) eine die Heizeinheit (12) axial abstützende Trägerstruktur (62, 64) angeordnet ist.

16. Abgasanlage für eine Brennkraftmaschine, umfassend wenigstens eine Abgasheizanordnung (14) nach einem der vorangehenden Ansprüche.

## Claims

1. An exhaust gas heating arrangement, comprising a heating unit (12) having a jacket heating element (28) having a jacket (30) and at least one heating conductor (32) which extends in the jacket and is surrounded by insulating material, wherein the heating unit (12) is spirally wound surrounding a longitudinal center axis (L), **characterized in that** a radially inner winding end region (46) of the heating unit (12) is offset with respect to a radially outer winding end region (48) of the heating unit (12) in the direction towards the longitudinal center axis (L), and **in that**, in at least one circumferential region, at least two directly adjacent winding sections (56, 58, 60) of the heating unit (12) overlap one another radially.

2. The exhaust gas heating arrangement as claimed in claim 1, **characterized in that** the heating unit (12) comprises a heat transfer surface formation (38) carried on the jacket (30).

3. The exhaust gas heating arrangement as claimed in claim 2, **characterized in that** the heating unit (12) has in the region of the jacket (30) or/and in the region of the heat transfer surface formation (38) an outer surface constructed with catalytically active material (70).

4. The exhaust gas heating arrangement as claimed in claim 2 or 3, **characterized in that** the heat transfer surface formation (38) comprises at least one heat transfer element (40) which surrounds the jacket heating element (28) in a helical manner, or/and **in that** the heat transfer surface formation (38) comprises a plurality of disk-like heat transfer elements arranged in succession in a longitudinal direction of the jacket heating element, or/and **in that** the heat transfer surface formation (38) comprises at least one heat transfer element which extends in a meandering manner along the jacket heating element (28) and through which the jacket heating element passes in respective heat transfer element portions, or/and **in that** the heat transfer surface formation (38) has a substantially round, preferably circular, outer circumferential contour.

5. The exhaust gas heating arrangement as claimed in one of the preceding claims, **characterized in that** the heating unit (12) is arranged in an exhaust gas routing housing (16) which is elongated in the direction of the longitudinal center axis (L), and **in that** the radially inner winding end region (46) of the heating unit (12) is arranged upstream, relative to an exhaust gas main flow direction (A) in the exhaust gas routing housing (16), with respect to the radially outer winding end region (48) of the heating unit (12).

6. The exhaust gas heating arrangement as claimed in claim 5, **characterized in that** the exhaust gas routing housing (16) presents a housing region (20) which widens radially in the exhaust gas main flow direction (A), and **in that** the heating unit (12) is arranged at least in part in the radially widening housing region (20), or/and **in that** an exhaust gas treatment unit (10), preferably a catalytic converter unit or/and a particle filter unit, is arranged downstream of the heating unit (12).

7. The exhaust gas heating arrangement as claimed in claim 6, **characterized in that** in at least one, preferably each, circumferential region, an opening angle (a) of the radially widening housing region (20) relative to the longitudinal center axis (L) is smaller than a heating unit setting angle (b), relative to the longitudinal center axis (L), of a heating unit setting line (H) which intersects the longitudinal center axis (L) and at least two, preferably all, of the winding portions (56, 58, 60) of the heating unit (12) in the region of a center (Z) of the jacket heating element (28) in the at least one circumferential region.

8. The exhaust gas heating arrangement as claimed in claim 7, **characterized in that** the exhaust gas treatment unit (10) has an inflow side (26) which is oriented in the upstream direction and inclined at an exhaust gas treatment unit setting angle (c) relative to the longitudinal center axis (L), and that in at least one, preferably each, circumferential region, the heating unit setting angle (b) is smaller than the exhaust gas treatment unit setting angle (c).

9. The exhaust gas heating arrangement as claimed in claim 8, **characterized in that** the heating unit setting angle (b) is smaller than or equal to half the sum of the opening angle (a) and the exhaust gas treatment unit setting angle.

10. The exhaust gas heating arrangement as claimed in one of the preceding claims, **characterized in that** in each circumferential region, at least two, preferably all, of the mutually directly adjacent winding portions (56, 58, 60) of the heating unit (12) overlap radially, or/and **in that** in each circumferential region, at least two, preferably all, of the mutually directly adjacent winding portions (56, 58, 60) of the heating unit (12) overlap axially.

11. The exhaust gas heating arrangement as claimed in one of the preceding claims, **characterized in that** in at least one, preferably each, circumferential region, at least two, preferably all, of the mutually directly adjacent winding portions (56, 58, 60) of the heating unit (12) do not overlap, preferably are at a distance (d) from one another, in the direction of a linearly extending heating unit setting line (H) which intersects the longitudinal center axis (L) and at least two, preferably all, of the winding portions (56, 58, 60) of the heating unit (12) in the region of a center (Z) of the jacket heating element (28) in the at least one circumferential region.

12. The exhaust gas heating arrangement as claimed in one of the preceding claims, **characterized in that** the radially inner winding end region (46) intersects the longitudinal center axis (L).

13. The exhaust gas heating arrangement as claimed in one of the preceding claims, **characterized in that** in at least one, preferably each, circumferential region, at least some, preferably all, of the winding portions (56, 58, 60) of the heating unit (12) lie with a center (Z) of the jacket heating element (28) on a linearly extending heating unit setting line (H) which intersects the longitudinal center axis (L).

14. The exhaust gas heating arrangement as claimed in one of claims 1-12,
**characterized in that** in at least one, preferably each, circumferential region, at least some, preferably all, of the winding portions (56, 58) of the heating unit (12) lie with a center (Z) of the jacket heating element (28) on a preferably arcuately curved, heating unit setting line (H') which intersects the longitudinal center axis (L).

15. The exhaust gas heating arrangement as claimed in one of the preceding claims, **characterized in that** on at least one, preferably both, of the axial sides of the heating unit (12) there is arranged a carrier structure (62, 64) which supports the heating unit (12) axially.

16. An exhaust gas system for a combustion engine, comprising at least one exhaust gas heating arrangement (14) as claimed in one of the preceding claims.

## Revendications

1. Dispositif de chauffage de gaz d'échappement comprenant une unité de chauffage (12) avec un élément chauffant d'enveloppe (28) avec un enveloppe (30) et au moins un conducteur chauffant (32) qui s'étend dans l'enveloppe et est entouré d'un matériau isolant, l'unité de chauffage (12) étant enroulée en spirale autour d'un axe central longitudinal (L), **caractérise en ce qu'**une zone d'extrémité d'enroulement radiale intérieure (46) de l'unité de chauffage (12) est décalée par rapport à une zone d'extrémité d'enroulement radiale extérieure (48) de l'unité de chauffage (12) en direction de l'axe central longitudinal (L), et **en ce que** dans au moins une zone circonférentielle, au moins deux sections d'enroulement directement adjacentes (56, 58, 60) de l'unité de chauffage (12) se chevauchent radialement l'une l'autre.

2. Dispositif de chauffage de gaz d'échappement selon la revendication 1, **caractérisé en ce que** l'unité de chauffage (12) comprend une formation de surface de transfert de chaleur (38) portée par l'enveloppe (30).

3. Dispositif de chauffage de gaz d'échappement selon la revendication 2, **caractérisé en ce que** l'unité de chauffage (12) présente, dans la zone de l'enveloppe (30) et/ou dans la zone de la formation de surface de transfert de chaleur (38), une surface extérieure constituée d'un matériau catalytiquement actif (70).

4. Dispositif de chauffage de gaz d'échappement selon la revendication 2 ou 3, **caractérisé en ce que** la formation de surface de transfert de chaleur (38) comprend au moins un élément de transfert de chaleur (40) qui entoure l'élément chauffant d'enveloppe (28) de manière hélicoïdale, ou/et **en ce que** la formation de surface de transfert de chaleur (38) comprend une pluralité d'éléments de transfert de chaleur en forme de disque disposés successivement dans une direction longitudinale de l'élément chauffant d'enveloppe, ou/et dans laquelle la formation de surface de transfert de chaleur (38) comprend au moins un élément de transfert de chaleur qui s'étend en méandres le long de l'élément chauffant d'enveloppe (28) et à travers lequel l'élément chauffant d'enveloppe passe dans des portions respectives d'éléments de transfert de chaleur, ou/et **en ce que** la formation de surface de transfert de chaleur (38) a un contour circonférentiel extérieur sensiblement rond, de préférence circulaire.

5. Dispositif de chauffage de gaz d'échappement selon l'une des revendications précédentes, **caractérisé en ce que** l'unité de chauffage (12) est disposée dans un boîtier d'acheminement de gaz d'échappement (16) qui est allongé dans la direction de l'axe central longitudinal (L), et **en ce que** la zone d'extrémité d'enroulement radialement intérieure (46) de l'unité de chauffage (12) est disposée en amont, par rapport à une direction principale d'écoulement de gaz d'échappement (A) dans le boîtier d'acheminement de gaz d'échappement (16), par rapport à la zone d'extrémité d'enroulement radialement extérieure (48) de l'unité de chauffage (12).

6. Dispositif de chauffage de gaz d'échappement selon la revendication 5, **caractérisé en ce que** le boîtier d'acheminement de gaz d'échappement (16) présente une zone de boîtier (20) qui s'élargit radialement dans la direction principale d'écoulement de gaz d'échappement (A), et **en ce que** l'unité de chauffage (12) est disposée au moins en partie dans la zone de boîtier (20) qui s'élargit radialement, ou/et **en ce que** une unité de traitement de gaz d'échappement (10), de préférence une unité de convertisseur catalytique ou/et une unité de filtrage de particules est disposée en aval de l'unité de chauffage (12).

7. Dispositif de chauffage de gaz d'échappement selon la revendication 6, **caractérisé en ce que**, dans au moins une zone circonférentielle, de préférence chaque zone circonférentielle, un angle d'ouverture (a) de la zone du boîtier s'élargissant radialement (20) par rapport à l'axe central longitudinal (L) est inférieur à un angle de réglage de l'unité de chauffage (b), par rapport à l'axe central longitudinal (L), d'une ligne de réglage de l'unité de chauffage (H) qui coupe l'axe central longitudinal (L) et au moins deux, de préférence toutes les parties d'enroulement (56, 58, 60) de l'unité de chauffage (12) dans la zone d'un centre (Z) de l'élément chauffant d'enveloppe (28) dans ledit au moins une zone circonférentielle.

8. Dispositif de chauffage de gaz d'échappement selon la revendication 7, **caractérisé en ce que** l'unité de traitement de gaz d'échappement (10) a un côté d'entrée (26) qui est orienté dans la direction amont et incliné dans un angle de réglage de l'unité de traitement de gaz d'échappement (c) par rapport à l'axe central longitudinal (L), et **en ce que** dans au moins une, de préférence chaque, zone circonférentielle, l'angle de réglage de l'unité de chauffage (b) est plus petit que l'angle de réglage de l'unité de traitement de gaz d'échappement (c).

9. Dispositif de chauffage de gaz d'échappement selon la revendication 8, **caractérisé en ce que** l'angle de réglage de l'unité de chauffage (b) est inférieur ou égal à la moitié de la somme de l'angle d'ouverture (a) et de l'angle de réglage de l'unité de traitement de gaz d'échappement.

10. Dispositif de chauffage de gaz d'échappement selon l'une des revendications précédentes, **caractérisé en ce que** dans chaque zone circonférentielle au moins deux, de préférence toutes les parties d'enroulement (56, 58, 60) mutuellement directement adjacentes de l'unité de chauffage (12) se chevauchent radialement, ou/et **en ce que** dans chaque zone circonférentielle, au moins deux, de préférence toutes les parties d'enroulement (56, 58, 60) mutuellement directement adjacentes de l'unité de chauffage (12) se chevauchent axialement.

11. Dispositif de chauffage de gaz d'échappement selon l'une des revendications précédentes, **caractérisé en ce que**, dans au moins une, de préférence dans chaque zone circonférentielle, au moins deux, de préférence toutes les parties d'enroulement (56, 58, 60) de l'unité de chauffage (12) directement adjacentes ne se chevauchent pas, de préférence ont une distance (d) l'une de l'autre, dans la direction d'une ligne de réglage de l'unité de chauffage (H) s'étendant linéairement et coupant l'axe central longitudinal (L) et au moins deux, de préférence toutes les parties d'enroulement (56, 58, 60) de l'unité de chauffage (12) dans la zone d'un centre (Z) de l'élément chauffant d'enveloppe (28).

12. Dispositif de chauffage de gaz d'échappement selon l'une des revendications précédentes, **caractérisé en ce que** la zone d'extrémité d'enroulement radialement intérieure (46) coupe l'axe central longitudinal (L).

13. Dispositif de chauffage de gaz d'échappement selon l'une des revendications précédentes, **caractérisé en ce que**, dans au moins une, de préférence dans chaque zone circonférentielle, au moins une partie des, de préférence toutes les parties d'enroulement (56, 58, 60) de l'unité de chauffage (12) se trouvent avec un centre (Z) de l'élément chauffant d'enveloppe (28) sur une ligne de réglage de l'unité de chauffage (H) s'étendant linéairement et coupant l'axe central longitudinal (L).

14. Dispositif de chauffage de gaz d'échappement selon l'une des revendications 1 à 12, **caractérisé en ce que** dans au moins une, de préférence chaque zone circonférentielle, au moins une partie des, de préférence toutes les parties d'enroulement (56, 58) de l'unité de chauffage (12) se trouvent avec un centre (Z) de l'élément chauffant d'enveloppe (28) sur une ligne de réglage de l'unité de chauffage (H'), de préférence incurvée en arc, qui coupe l'axe central longitudinal (L).

15. Dispositif de chauffage de gaz d'échappement selon l'une des revendications précédentes, **caractérisé en ce qu'**une structure de support (62, 64) supportant axialement l'unité de chauffage (12) est arrangée sur au moins un, de préférence les deux côtés axiaux de l'unité de chauffage (12).

16. Système de gaz d'échappement pour un moteur à combustion, comprenant au moins un dispositif de chauffage de gaz d'échappement (14) selon l'une des revendications précédentes.
